# EUROPEAN PATENT SPECIFICATION

(11) **EP 2 561 278 B1**
(45) Date of publication and mention of the grant of the patent: **17.10.2018**
(21) Application number: 11771641.5
(22) Date of filing: 19.04.2011
(51) Int. Cl.: F23C 10/28, F22B 31/00, F23L 7/00, F23N 1/02

(54) **METHOD OF CONTROLLING COMBUSTION IN A CFB BOILER PLANT**
VERFAHREN ZUR STEUERUNG DER VERBRENNUNG IN EINER CFB-ERHITZUNGSANLAGE
PROCÉDÉ DE COMMANDE DE LA COMBUSTION DANS UNE INSTALLATION DE CHAUDIÈRE CFB (À LIT FLUIDISÉ CIRCULANT)

(30) Priority: 23.04.2010 FI 20105440
(43) Date of publication of application: 27.02.2013
(73) Proprietor: Sumitomo SHI FW Energia Oy, 02130 Espoo (FI)
(72) Inventor: HOTTA, Arto, FI-78710 Varkaus (FI); KETTUNEN, Ari, FI-79100 Leppävirta (FI); KOVACS, Jenö, FI-90540 Oulu (FI)
(74) Representative: Genip Oy
(86) International application number: PCT/FI2011/050353
(87) International publication number: WO 2011/131837

(56) References cited:
- EP-A1- 1 959 193
- DE-A1- 3 204 550
- DE-A1- 3 546 465
- JP-A- 1 111 109
- JP-B2- H0 625 602
- US-A1- 2009 056 603
- US-A1- 2009 158 978

## Description

### BACKGROUND OF THE INVENTION

### Field of the invention

The present invention relates to a method of controlling combustion in a circulating fluidized bed (CFB) boiler plant, in accordance with the preamble of the independent method claim. The invention thus relates to a method of controlling combustion in the furnace of a circulating fluidized bed boiler plant, the method comprising in first stable load conditions the steps of: (a) feeding fuel at a first fuel feeding rate, proportional to the first load, into the furnace; (b) feeding a feed stream of oxygen at a first oxygen feeding rate, adjusted to maintain a predetermined first oxygen/fuel ratio, into the furnace, so as to combust the fuel at the first fuel feeding rate, whereby a bed char inventory is being maintained in the furnace, and in conditions of increasing the load from the first stable load conditions, the steps of: (a') feeding fuel at a second fuel feeding rate into the furnace, wherein the second fuel feeding rate is higher than the first fuel feeding rate, and (b') feeding a feed stream of oxygen at a second oxygen feeding rate into the furnace.

### Description of the Related Art

The boiler load, i.e., the amount of steam generated in the boiler, depends on the amount of energy released from the combustion reactions of the fuel with oxygen. The feeding rates of fuel and oxygen containing gas, so-called oxidant gas, which are generally closely related to each other, depend on the load of the boiler. When the boiler is operated at the full load, the feeding rates of the fuel and oxidant gas are high, whereas at lower loads they are reduced. When combusting solid carbonaceous fuel in a circulating fluidized bed boiler, the oxygen feeding rate is generally slightly higher than what is theoretically needed for complete combustion of the fuel. The amount of unburned carbon in the ash discharged from the furnace of a CFB boiler as well as overall emissions of carbon monoxide and NO_{X} are generally minimized when the oxidant feeding rate is such that the flue gas discharged from the furnace contains about 3 % oxygen, so-called residual oxygen.

Generally, a boiler plant should be able to follow the load demand, i.e., to generate steam, or power, in an amount corresponding to the demand at each moment. An important characterizing feature of a boiler is its load changing capability, i.e., highest possible rate at which the boiler load can be changed when the demand for steam changes. High load changing rate is needed, for example, in an industrial boiler, when the state of the process is rapidly changed so that the demand for steam changes. Power generating boilers need fast load change in case the boiler is a load controlling plant, which may have to change its load several times during a day, or, especially, when the boiler is a plant controlling the frequency of the power grid. The required load of a boiler can often be known in advance, but in some cases the load should be changed rapidly, even without a warning in advance.

The fuel fed to the furnace of a CFB boiler does not burn instantly, but, instead, complete combustion of the fuel takes place within a certain time, typically of several minutes. The combustion intensity is determined by the reactivity of the fuel, which depends on the chemical composition and physical properties of the fuel. When the fuel feeding rate is changed to a constant value at a point in time, the furnace settles during a certain period to an equilibrium state, where as much fuel is combusted in the furnace as is fed therein. During the equilibrium, the fluidized bed in the furnace comprises a bed char inventory, i.e., an inventory of unburned fuel material, the size of the inventory being generally proportional to the feeding rate of the fuel and the oxidant, and inversely proportional to the reactivity of the fuel.

If the feeding rates of the fuel and the oxidant are suddenly increased to new values corresponding to new stable load conditions, the concentration of residual oxygen in the flue gas may temporarily increase, because the added fuel does not burn immediately. Therefore, the mass of the bed char inventory increases slowly to a new equilibrium value. Correspondingly, the rate of releasing energy from the fuel reaches its final new value only when the bed char inventory has reached its new equilibrium size. Under these conditions, the load following capacity of a CFB boiler is slowed down by the large bed char inventory.

Maximum load changing rate can to some extent be improved by an optimized fuel feeding approach, as suggested in US Pat. No. 4,800,846, or by changing the thermal transfer efficiency of the bed by the aid of a storage of fly ash, as suggested in US Pat. No. 5,363,812. These methods, however, are not very efficient and/or they may have an adverse effect to the emissions released to the atmosphere. US Patent publication No. 2009/0056603, which covers the features specified in the preamble of claim 1, shows that fuel bed inventory may change in an unpredictable way when controlling fuel and air feeding rates to a CFB boiler, and suggests a complex method of controlling the fuel bed inventory in order to permit thermal power control of the boiler by the supply of primary air to the boiler.

### SUMMARY OF THE INVENTION

An object of the present invention is to provide an improved method of combustion control in a CFB boiler plant.

Particularly, an object of the present invention is to provide a method of efficient load control of a CFB boiler plant.

In order to obtain these and other objects of the present invention, a method in accordance with the characterizing part of the independent method claim is provided. Thereby, the invention relates to a method wherein, in the conditions of increasing the load, the oxygen/fuel ratio is higher than the first oxygen/fuel ratio, so as to combust the fuel at the second fuel feeding rate and to decrease the bed char inventory by combusting char of the bed char inventory.

The main idea of the invention is that, in order to obtain a fast increase of the boiler load, the amount of oxygen fed into the furnace is temporarily changed to be higher than what is needed to combust the fuel being at the same time fed into the furnace. The increase of the amount of oxygen fed into the furnace is preferably made by increasing the oxygen content of the oxidant gas stream during the increasing load. Due to the increased amount of oxygen in the oxidant stream, the combustion rate of the bed char inventory is increased and more thermal power is generated. Because the increasing of the thermal power is based on combusting uncombusted char already present in the furnace, it can be started very fast. Thereby, the total rate of combustion taking place in the furnace is rapidly increased, and more steam can be generated. Thus, a large bed inventory is here used as an advantage to make the load change faster.

According to a preferred embodiment of the present invention, the circulating fluidized bed boiler is an oxyfuel combustion boiler, wherein the oxidant is a mixture of a feed stream of substantially pure oxygen (O₂) and recycled flue gas. Thus, as is commonly known, the flue gas discharged from the furnace mainly consists of carbon dioxide (CO₂) and water (H₂O), and it is relatively easy to capture CO₂ from the flue gas in a carbon capturing unit (CCU) and to avoid releasing it to the atmosphere. The stream of substantially pure oxygen, comprising usually at least about 95 % oxygen, to be fed to the furnace, is usually produced in an air separation unit (ASU). A portion of the flue gas discharged from the furnace is advantageously recycled back to the furnace in order to act as fluidizing gas and to maintain the combustion temperature at a suitable level.

The oxygen feeding rate is generally even in oxyfuel combustion directly proportional to the fuel feeding rate, and, according to conventional practice, the oxygen content of the oxidant gas is adjusted by controlling the flue gas recirculation rate. The oxygen content may then be, for example, close to that of air, such as from about 20 % to about 28 %, which is obtained by recycling from about 80 to about 70 % of the flue gas. According to the present invention, and contrary to the above mentioned practice, the oxygen content of the oxidant is not increased, in the conditions of increasing load, by decreasing the flue gas recirculation rate, but by increasing the amount of oxygen in the oxidant.

When applying the present invention, the fuel feeding rate may be changed in the conditions of increasing load either directly to a value corresponding to a desired new load, or it may be changed according to a specific procedure, such as by having initially a value which is higher, or lower, than the final value. In any case, the increasing of the amount of oxygen fed to the furnace is made so as to provide an increased oxygen/fuel ratio in the conditions of increasing load.

The rate of recirculating flue gas, which usually forms a majority of the total oxidant gas, is not changed in the same way as the oxygen stream, but it is preferably increased only by an amount proportional to the desired load change. Because only a small portion of the total gas introduced to the furnace, i.e., the feed stream of substantially pure oxygen, is increased by an amount which is relatively clearly higher than the load change, the bed dynamics and, especially, the change of the bed char inventory can be controlled more easily than in the process described in the US Patent publication No. 2009/0056603. The method of enhancing the load change by using an especially increased flow rate only for the oxygen stream, not for the whole oxidant stream, has also the advantage that the efficiency of the recycling gas blower is not critical for obtaining a rapid load change.

Oxidant gas is conventionally fed into the furnace as a primary gas, introduced as a fluidizing gas at the bottom of the furnace, and as a secondary gas, introduced above, typically 1 - 3 m above, the bottom of the furnace. According the a preferred embodiment of the present invention, the oxygen content, i.e., the ratio of the oxygen feed stream and the recycled feed stream, of the primary gas is in the conditions of increasing the load higher than the oxygen content of the secondary gas. By this method, the increased feed stream of substantially pure oxygen is in the conditions of increasing the load especially directed to the bottom portion of the furnace, whereby the bed char inventory is efficiently decreased. In some cases it is possible to maintain the oxygen content of the secondary gas constant, or even slightly decrease it, in the conditions of increasing the load, and still obtain the desired enhanced load change.

According to the present invention, the load is increased from the first stable load conditions to second stable load conditions, wherein the second load is higher than the first load. As described above, during the load change the oxygen/fuel ratio is, according to the present invention, higher than the first oxygen/fuel ratio. When the required second load, i.e., steam generation rate or power, is obtained, the oxygen feeding rate is smoothly changed back to a value providing again an oxygen/fuel ratio substantially equal to the first oxygen/fuel ratio. In the second stable load conditions, the feeding rates of the fuel and oxygen, so-called third feeding rates of fuel and oxygen, are naturally higher than the first feeding rates of fuel and oxygen, used in the first stable load conditions, but fuel is again combusted nearly at the same rate as it is fed to the furnace. Thereby, the bed char inventory, the size of which reduced during the load increase, is gradually formed to its new equilibrium size.

Furthermore, according to the invention, the oxygen feeding rate is in the conditions of increasing load higher than in the second stable load conditions. Assuming that the load at the second stable load conditions is N % higher than the load at the first stable load conditions, the second oxygen feeding rate, i.e. the oxygen feeding rate in the conditions of increasing load, is at least about one and a half times N % higher, preferably at least two times N % higher, more preferably from about two to about three times higher than the first oxygen feeding rate. By these advantageous oxygen feeding rates, it is possible to efficiently combust char of the bed char inventory and a rapid load increase is obtained. The additional heat released during the char combustion thus improves the transient or dynamical behavior of the overall heat release, and the time-constant to reach the higher load level is decreased.

The boiler plant advantageously comprises a storage of oxygen, preferably a storage of liquid oxygen. The stream of substantially pure oxygen being produced in the air separation unit, so-called produced stream of substantially pure oxygen, is in the first stable load conditions advantageously somewhat higher than what is needed to combust the fuel at the first rate. Thereby, a portion of the produced oxygen is advantageously stored into the oxygen storage. According to a preferred embodiment of the present invention, at least a portion of the feed stream of substantially pure oxygen is in the increasing load conditions obtained from the oxygen storage.

The use of oxygen obtained from an oxygen storage during a fast load change is especially advantageous because the oxygen demand during a load change may be clearly higher than that during stable full load operation. By using an oxygen storage to assist in providing the required higher oxygen flow, it is possible to avoid additional investment costs of an oversized ASU. Moreover, the ASU is generally a complex apparatus, and it is possible that it cannot change its oxygen producing capacity very fast. In these conditions, it would generally not be possible to obtain a very fast increase in oxygen production of an ASU.

Usually the need for a rapid load change of a boiler is related to a need to rapidly change the net power generated in the boiler plant. According to a preferred embodiment of the present invention, which is especially useful, for example, for a boiler used for grid frequency control, the generated net power is maximized during a rapid load increase by providing a large portion, preferably all, of the feed stream of substantially pure oxygen from an oxygen storage. At the same time, the production of substantially pure oxygen in the air separation unit is advantageously decreased or it is completely stopped. Thereby, the auxiliary power normally used to produce substantially pure oxygen is minimized, and a very rapid change of the power output can be achieved.

The size of the oxygen storage is advantageously large enough for only a portion of the stored oxygen being used during the load increase. With such a large oxygen storage, it is possible to feed also a portion of the oxygen needed to combust the fuel being fed to the furnace after the load increase, i.e., in the second stable load conditions, from the oxygen storage. Under these conditions, it is possible to have in the second stable load conditions a produced stream of substantially pure oxygen that is lower than what is needed to combust the fuel being fed to the furnace. Thereby, the auxiliary power needed to the air separation at the high load conditions is minimized, and it is then possible to provide more power to the grid.

Especially when the load is cyclically changed in a predetermined way, it may even be possible to have in the power plant an oxygen supply comprising, instead of an ASU designed for providing enough oxygen for combusting the fuel at full load, a smaller capacity ASU and a sufficient oxygen storage. Preferably, the ASU is designed to provide oxygen for, or slightly more than, average daily load. By using such a small sized ASU, the costs of the ASU are naturally reduced. This method of oxycombustion is in fact advantageous even when there is no need for fast load changes by temporarily increasing the oxygen/fuel ratio.

When using an ASU designed as described above, the oxygen producing rate of the ASU is preferably in the second stable load conditions about as high as in the first stable load conditions. Even more preferably, the ASU is used at least most of the time at a constant oxygen producing rate, i.e. at its nominal oxygen producing rate. By decoupling the operation of the ASU from the boiler operation, as described above, the ASU can be operated all the time at its optimum efficiency. Thereby, also a considerable portion of the use of auxiliary power of the boiler plant is shifted from high load conditions to lower load conditions. Thus, an efficient, uninterrupted oxyfuel combustion, with CO₂ capture, can be maintained at all load conditions.

According to another advantageous combustion control method of an oxycombustion boiler, the ASU of the boiler plant is used in higher load conditions at a lower oxygen producing rate than in lower load conditions. Especially, when the high load conditions last only a relatively short time, but the power demand is then very high, for example, when the boiler is used for grid frequency control, it is useful that the oxygen production rate of the ASU is minimized or completely stopped at the high load conditions. Then all the oxygen needed for the oxyfuel combustion is obtained from an oxygen storage, and the auxiliary power used for generating oxygen, is minimized. Thereby, the power output of the boiler plant can be momentarily maximized.

The above brief description, as well as other objects, features and advantages of the present invention will be more fully appreciated by reference to the following detailed description of the currently preferred, but nonetheless illustrative, embodiments and examples of the present invention, taken in conjunction with the accompanying drawings.

### BRIEF DESCRIPTION OF THE DRAWINGS

FIG. 1 is a schematic diagram of an oxyfuel combustion CFB boiler plant.
FIG. 2 is a schematic diagram of change of generated power during a load change when using different oxygen feeding rates.
FIG. 3 is a schematic diagram of the production and use of oxygen in cyclically varying load conditions.
FIG. 4 is a schematic diagram of the production and use of oxygen during a rapid peak load.

### DETAILED DESCRIPTION OF THE INVENTION

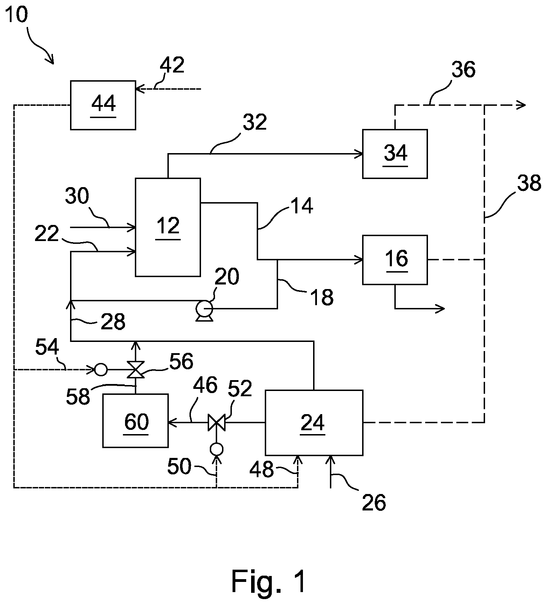

FIG. 1 shows a schematic diagram of an oxyfuel combustion CFB boiler plant 10, comprising a CFB boiler with a furnace 12, a flue gas channel 14 leading to a CO2 capturing unit (CCU) 16, a flue gas recycling loop 18 with a fan 20 connected to means for feeding oxidant gas 22 to the furnace. An air separation unit (ASU) 24, which separates oxygen from a stream of air 26, is connected to the flue gas recycling loop 18 with an oxygen feeding channel 28. Thus, in order to maintain the furnace at a suitable temperature, it is possible to feed to the furnace 12 oxidant gas consisting of a mixture recycled flue gas and substantially pure oxygen from the ASU. Fuel is fed by fuel feeding means 30 to the furnace 12, to combust the fuel with the oxygen. Steam 32 generated in the boiler is conducted to a steam turbine and power generator 34 to provide power 36 to the power grid.

As is well known, the advantage of oxyfuel combustion is that due to the combusting of the fuel with an oxidant consisting of substantially pure oxygen and recycled flue gas, the generated flue gas consists mainly of CO₂ and water, and thereby CO₂ can be relatively easily separated from the flue gas in the CCU 16. Correspondingly, a well known disadvantage of oxyfuel combustion is that a considerable portion of the generated power 36 has to be used as an auxiliary power 38 for operating the CCU 16 and ASU 24.

The operation of the CFB boiler plant 10 is controlled by a unit control 44, which receives a power demand signal 42 from a controller of the power grid. On the basis of the power demand signal, the unit control 44 controls the load of the boiler, i.e. the rate of combustion and steam generation in the boiler. As is well-known, the boiler load can be increased by increasing the feeding rates of the fuel and the oxidant.

Complete combustion of the fuel fed into the boiler does not take place instantaneously, but generally during several minutes, and therefore the fluidized bed in the furnace 12 comprises a considerable amount of unburned char, so-called bed char inventory. According to the present invention, in order to obtain a fast increase of the boiler load, the bed char inventory is utilized to generate additional power. This is made by increasing the feeding rate of oxygen so that oxygen/fuel ratio is higher than at stable load conditions. Thereby, a portion of the bed char inventory is combusted, and additional heat energy is released to rapidly increase the rate of steam generation.

According to a preferred embodiment of the present invention, an oxygen storage 60 is connected by a channel 46 to the ASU, so that a portion of the oxygen produced in the ASU can be stored to the oxygen storage. Conventionally any oxygen needed to the combustion is generated on-line by the ASU 24 on the basis of a control signal 48 from the unit controller 44. However, the ASU is a large and complex apparatus, and it is possible that the ASU is not capable to increase its oxygen producing rate fast enough for a rapid load change. Therefore, according to an aspect of the invention, a portion of the oxygen needed for rapid load increase is obtained from the oxygen storage 60, where it has been stored when the demand of oxygen has been low. The storing of oxygen into the storage 60 is advantageously controlled, on the basis of a control signal 50 from the unit controller 44, by a valve 52 in the channel 46. Correspondingly, the using of oxygen from the storage 60 is advantageously controlled, on the basis of a control signal 54 from the unit controller 44, by a valve 56 in the channel 58 leading from the oxygen storage 60 to the oxygen feeding channel 28.

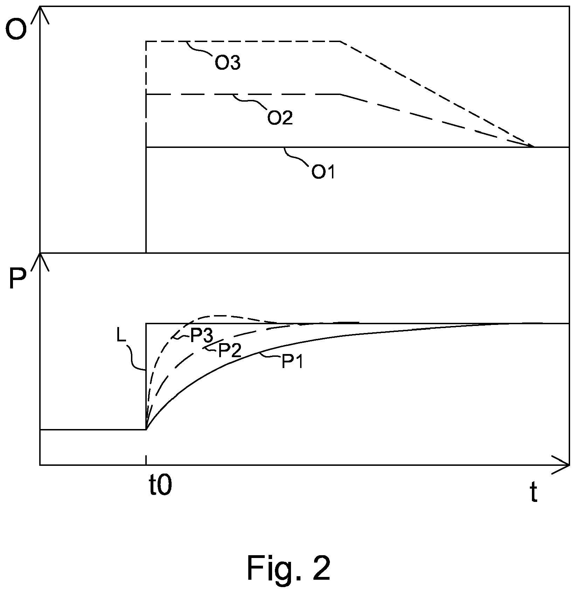

FIG. 2 shows, in its lower portion, schematic diagrams of the change of the total power P generated during a load change of a CFB oxyfuel combustion plant when varying the oxygen feeding scheme. In the process, the power demand L is suddenly changed at time t0 to a higher value. According to conventional practice, immediately at t0, or as fast as it is possible, the feeding rates of fuel and oxygen are increased to new values corresponding to the new load demand, by keeping the oxygen/fuel ratio in its original value. Line O1 in the upper portion of FIG. 2. shows schematically a conventional change of the oxygen feeding rate, and line P1 in the lower portion of FIG. 2 shows correspondingly how the output power slowly rises to its new equilibrium value, in accordance with the new power demand. The slowness of the output power increase is at least partly due to the increasing of the mass of the bed char inventory to its new equilibrium value. This means that during a period after the load change, a portion of the increased fuel feeding rate does not increase the rate of releasing heat energy, but adds to the bed char inventory.

According to the present invention, the oxygen feeding rate is increased during the load increase to a value that is higher than its conventional value. Such oxygen feeding rates are shown by lines O2 and O3, in the upper portion of FIG. 2. According to the present invention, the relative change of the oxygen feeding rate is higher than that of the fuel feeding rate. Thereby, the oxygen/fuel ratio is, during the load change, increased to a value, which is higher than its original, or conventional, value. Preferably, the oxygen feeding rate is increased to an exceptionally high value at time t0, and maintained at that value approximately until the total generated power of the boiler plant corresponds to the power demand. Thereafter the oxygen feeding rate is slowly returned back to a value providing substantially the original oxygen/fuel ratio. It is also possible that in some cases the returning of the oxygen feeding rate is started before the total generated power has reached the power demand. The returning of the oxygen feeding rate is in FIG. 2 shown to take place approximately as fast as it takes to increase of the total generated power to its required value, but in reality the time for returning back the oxygen feeding rate may be clearly longer than the time to increase the power.

When the oxygen feeding rate is increased from its conventional value to a higher value, as shown by the line O2 in the upper portion of FIG. 2, the power output raises quite rapidly, as shown by line P2 in the lower portion of FIG. 2, and the required level is reached much faster than when using a constant oxygen/fuel ratio. When the oxygen feeding rate is raised to an even higher value, as shown by O3 in the upper portion of FIG. 2, the output power raises even more rapidly, as shown by the line P3 in the lower portion of FIG. 2. However, as shown by the line P3, the oxygen feeding rate O3 is so high that the output power reaches its equilibrium value only after an overshoot. Therefore, in this case the required power level is reached only approximately as fast as when using the lower oxygen feeding rate according to line O2.

In a calculated example, the total power of an oxycombustion CFB boiler was changed from 642 MW to 668 MW, i.e., by 4 %, by using different oxygen feed rates during the load change. When the oxygen/fuel ratio was increased during the load change by 5,2 %, the time to reach 4/5 of the load change decreased to less than a half of its original value, i.e. the value obtained when the load change is performed by maintaining the oxygen/fuel ratio. When the oxygen/fuel ratio was increased by 9,9 %, the time to reach 4/5 of the load change decreased to less than a quarter of the original value. According to the latter calculation, the rapid raise of the power caused a slight overshoot, and, therefore, the final value was obtained approximately only as fast as in the calculation with 5,3 % increase of the oxygen/fuel ratio.

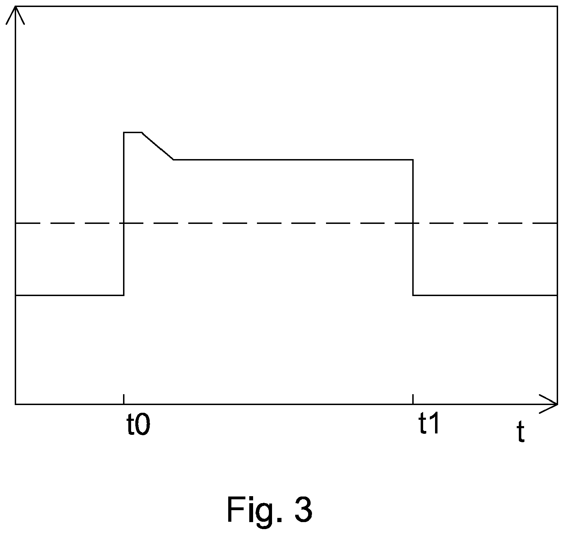

FIG. 3 schematically shows an advantageous method to generate and consume oxygen in an oxyfuel combustion CFB boiler plant in cyclically varying load conditions. As shown by a dashed line in FIG. 3, oxygen is generated in an ASU at a constant rate. The ASU is advantageously designed so that oxygen is efficiently generated at a rate which corresponds to the average oxygen demand of the boiler. Oxygen consumption, shown in FIG. 3 by a solid line, is at high load conditions, for example, between times t0 and t1 at a level higher than the production rate of oxygen, but at low load conditions, less than the rate of oxygen production.

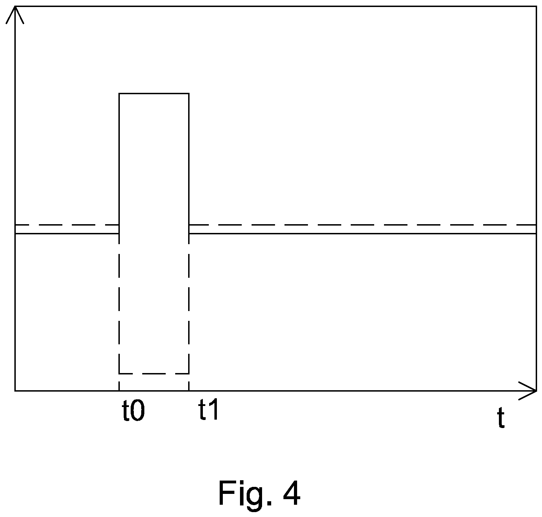

FIG. 4 schematically shows an advantageous method to generate and consume oxygen in an oxyfuel combustion CFB boiler plant during a rapid load peak between times t0 and t1. During the peak power, the oxygen consumption, shown by a solid line in FIG. 4, is increased. However, as is shown by a dashed line in FIG. 4, oxygen is generated in stable load conditions at a rate which is slightly higher than needed, but during the load peak, between times t0 and t1, the generation of oxygen is rapidly decreased. By this method, the auxiliary power of the plant is minimized during the peak load, and more power can be provided to the power grid. The consumption of oxygen at the onset of the peak power can be momentarily increased, as shown, for example, in FIG. 3. However, especially if the load changing rate is not critical, the consumption of oxygen can be immediately at its final level, as shown in FIG. 4. Such a simple oxygen consumption scheme can often be used also in the case shown in FIG. 3.

While the invention has been described herein by way of examples in connection with what are, at present, considered to be the most preferred embodiments, it is to be understood that the invention is not limited to the disclosed embodiments, but is intended to cover various combinations or modifications of its features and several other applications included within the scope of the invention as defined in the appended claims.

## Claims

1. A method of controlling combustion in the furnace of a circulating fluidized bed boiler plant, the method comprising in first stable load conditions the steps of:
(a) feeding fuel at a first fuel feeding rate, proportional to the first load, into the furnace;
(b) feeding a feed stream of oxygen at a first oxygen feeding rate, adjusted to maintain a predetermined first oxygen/fuel ratio, into the furnace, so as to combust the fuel at the first fuel feeding rate, whereby a bed char inventory is being maintained in the furnace,
and in conditions of increasing the load from the first stable load conditions to second stable load conditions, wherein the load in the second stable load conditions is N % higher than the load in the first stable load conditions, the steps of:
(a') feeding fuel at a second fuel feeding rate into the furnace, wherein the second fuel feeding rate is higher than the first fuel feeding rate, and
(b') feeding a feed stream of oxygen at a second oxygen feeding rate into the furnace,
and in the second stable conditions the steps of:
(a") feeding fuel at a third fuel feeding rate, proportional to the second load, into the furnace;
(c') feeding a feed stream of oxygen at a third oxygen feeding rate, adjusted to substantially maintain the first oxygen/fuel ratio, into the furnace, so as to combust the fuel at the third fuel feeding rate, wherein the second oxygen feeding rate is higher than the third oxygen feeding rate,
**characterized in that** in the conditions of increasing the load, the oxygen/fuel ratio is higher than the first oxygen/fuel ratio and the second oxygen feeding rate is at least about one and a half times N % higher than the first oxygen feeding rate, so as to combust the fuel at the second fuel feeding rate and to decrease the bed char inventory by combusting char of the bed char inventory.

2. The method according to claim 1, **characterized in that** the method comprises a step of feeding a recycled stream of flue gas into the furnace.

3. The method according to claim 2, **characterized in that** the ratio of the oxygen feed stream to the recycled stream is higher in the conditions of increasing the load than in the first stable load conditions.

4. The method according to claim 3, **characterized in that** a mixture of the oxygen feed stream and the recycled feed stream is fed into the furnace as a primary gas and as a secondary gas, and in the conditions of increasing the load, the ratio of the oxygen feed stream to the recycled stream of the primary gas is higher than the ratio of the oxygen feed stream to the recycled stream of the secondary gas.

5. The method according to claim 1, **characterized in that** the boiler plant comprises an oxygen supply to produce a stream of substantially pure oxygen, and in the first stable load conditions, the produced stream of substantially pure oxygen is higher than the feed stream of substantially pure oxygen, and a portion of the produced stream of substantially pure oxygen is stored into an oxygen storage.

6. The method according to claim 5, **characterized in that** at least a portion of the feed stream of substantially pure oxygen is in the increasing load conditions obtained from the oxygen storage.

7. The method according to claim 6, **characterized in that** the produced stream of substantially pure oxygen is in the increasing load conditions lower than the produced stream of substantially pure oxygen in the first stable load conditions.

8. The method according to claim 2, **characterized in that** the boiler plant comprises an oxygen supply to produce a stream of substantially pure oxygen, and in the second stable load conditions, the produced stream of substantially pure oxygen is lower than the feed stream of substantially pure oxygen, and at least a portion of the feed stream of substantially pure oxygen is obtained from an oxygen storage.

9. The method according to claim 8, **characterized in that** the produced stream of substantially pure oxygen is in the second stable load conditions as high as the produced stream of substantially pure oxygen in the first stable load conditions.

10. The method according to claim 9, **characterized in that** the produced stream of substantially pure oxygen is in the second stable load conditions lower than the produced stream of substantially pure oxygen in the first stable load conditions.

## Patentansprüche

1. Verfahren zur Steuerung der Verbrennung in der Feuerung einer zirkulierenden Wirbelschichtkesselanlage, wobei das Verfahren in den ersten stabilen Lastzuständen die folgenden Schritte umfasst:
(a) Zuführen von Brennstoff mit einer ersten Brennstoffzufuhrrate, proportional zur ersten Last, in die Feuerung;
(b) Zuführen eines Sauerstoffzufuhrstroms mit einer ersten Sauerstoffzufuhrrate, die eingestellt ist, um ein vorbestimmtes erstes Sauerstoff-/Brennstoff-Verhältnis aufrecht zu erhalten, in die Feuerung, um den Brennstoff bei der ersten Brennstoffzufuhrrate zu verbrennen, wodurch ein Wirbelbett-Kohleinventar in der Feuerung aufrechterhalten wird,
und in Zuständen des Erhöhens der Last von den ersten stabilen Lastzuständen zu zweiten stabilen Lastzuständen, wobei die Last in den zweiten stabilen Lastzuständen N % höher ist als die Last in den ersten stabilen Lastzuständen, die Schritte umfasst:
(a') Zuführen von Brennstoff mit einer zweiten Brennstoffzufuhrrate in die Feuerung, wobei die zweite Brennstoffzufuhrrate höher als die erste Brennstoffzufuhrrate ist, und
(b') Zuführen eines Sauerstoffzufuhrstroms mit einer zweiten Sauerstoffzufuhrrate in die Feuerung,
und in den zweiten stabilen Lastzuständen, die folgenden Schritte umfasst:
(a") Zuführen von Brennstoff mit einer dritten Brennstoffzufuhrrate, die proportional zu der zweiten Last ist, in die Feuerung;
(c') Zuführen eines Sauerstoffzufuhrstroms mit einer dritten Sauerstoffzufuhrrate, die eingestellt ist, um das erste Sauerstoff-/Brennstoff-Verhältnis im Wesentlichen aufrecht zu erhalten, in die Feuerung, um den Brennstoff bei der dritten Brennstoffzufuhrrate zu verbrennen, wobei die zweite Sauerstoffzufuhrrate höher als die dritte Sauerstoffzufuhrrate ist,
**dadurch gekennzeichnet, dass** in den Zuständen der zunehmenden Last, das Sauerstoff-/Brennstoff-Verhältnis höher als das erste Sauerstoff-/Brennstoff-Verhältnis ist, und die zweite Sauerstoffzufuhrrate mindestens etwa eineinhalb Mal N % höher als die erste Sauerstoffzufuhrrate ist, um den Brennstoff bei der zweiten Sauerstoffzufuhrrate zu verbrennen und das Wirbelbett-Kohleinventar durch Verbrennen der Kohle des Wirbelbett-Kohleinventars zu verringern.

2. Verfahren nach Anspruch 1, **dadurch gekennzeichnet, dass** das Verfahren einen Schritt des Zuführens eines zurückgeführten Rauchgasstroms in die Feuerung umfasst.

3. Verfahren nach Anspruch 2, **dadurch gekennzeichnet, dass** das Verhältnis des Sauerstoffzufuhrstroms zum zurückgeführten Strom in den Zuständen der Erhöhung der Last höher als in den ersten stabilen Lastzuständen ist.

4. Verfahren nach Anspruch 3, **dadurch gekennzeichnet, dass** eine Mischung aus dem Sauerstoffzufuhrstrom und dem zurückgeführten Zufuhrstrom in die Feuerung als ein Primärgas und als ein Sekundärgas zugeführt wird, und in den Zuständen der Erhöhung der Last das Verhältnis des Sauerstoffzufuhrstroms zum zurückgeführten Strom des Primärgases höher als das Verhältnis des Sauerstoffzufuhrstroms zum zurückgeführten Strom des Sekundärgases ist.

5. Verfahren nach Anspruch 1, **dadurch gekennzeichnet, dass** die Kesselanlage eine Sauerstoffzufuhr umfasst, um einen Strom von im Wesentlichen reinem Sauerstoff zu erzeugen, und in den ersten stabilen Lastzuständen der erzeugte Strom von im Wesentlichen reinem Sauerstoff höher als der Zufuhrstrom von im Wesentlichen reinem Sauerstoff ist, und ein Teil des erzeugten Stroms von im Wesentlichen reinem Sauerstoff in einem Sauerstoffspeicher gespeichert wird.

6. Verfahren nach Anspruch 5, **dadurch gekennzeichnet, dass** wenigstens ein Teil des Zufuhrstroms von im Wesentlichen reinem Sauerstoff in den ansteigenden Lastzuständen vom Sauerstoffspeicher erhalten wird.

7. Verfahren nach Anspruch 6, **dadurch gekennzeichnet, dass** der erzeugte Strom von im Wesentlichen reinem Sauerstoff in den zunehmenden Lastzuständen niedriger als der erzeugte Strom von im Wesentlichen reinem Sauerstoff in den ersten stabilen Lastzuständen ist.

8. Verfahren nach Anspruch 2, **dadurch gekennzeichnet, dass** die Kesselanlage eine Sauerstoffzufuhr umfasst, um einen Strom von im Wesentlichen reinem Sauerstoff zu erzeugen, und in den zweiten stabilen Lastzuständen der erzeugte Strom von im Wesentlichen reinem Sauerstoff niedriger als der Zufuhrstrom von im Wesentlichen reinem Sauerstoff ist, und wenigstens ein Teil des Zufuhrstroms von im Wesentlichen reinem Sauerstoff aus einem Sauerstoffspeicher erhalten wird.

9. Verfahren nach Anspruch 8, **dadurch gekennzeichnet, dass** der erzeugte Strom von im Wesentlichen reinem Sauerstoff in den zweiten stabilen Lastzuständen so hoch ist wie der erzeugte Strom von im Wesentlichen reinem Sauerstoff in den ersten stabilen Lastzuständen.

10. Verfahren nach Anspruch 9, **dadurch gekennzeichnet, dass** der erzeugte Strom von im Wesentlichen reinem Sauerstoff in den zweiten stabilen Lastzuständen niedriger als der erzeugte Strom von im Wesentlichen reinem Sauerstoff in den ersten stabilen Lastzuständen ist.

## Revendications

1. Procédé pour contrôler la combustion dans le four d'une installation de chaudière à lit fluidisé circulant, le procédé comprenant les étapes suivantes, dans des premières conditions de charge stable :
(a) alimentation de combustible à une première vitesse d'alimentation de combustible, proportionnelle à la première charge, dans le four ;
(b) alimentation d'un flux d'alimentation d'oxygène à une première vitesse d'alimentation d'oxygène, réglée pour maintenir un premier rapport oxygène-combustible prédéterminé, dans le four, de manière à brûler le combustible à la première vitesse d'alimentation de combustible, un stock de charbon de lit étant maintenu dans le four,
et, dans des conditions d'augmentation de la charge, des premières conditions de charge stable à des deuxièmes conditions de charge stable, où la charge dans les deuxièmes conditions de charge stable est supérieure de N% à la charge dans les premières conditions de charge stable, les étapes suivantes :
(a') alimentation de combustible à une deuxième vitesse d'alimentation de combustible dans le four, la deuxième vitesse d'alimentation de combustible étant supérieure à la première vitesse d'alimentation de combustible, et
(b') alimentation d'un flux d'alimentation d'oxygène à une deuxième vitesse d'alimentation d'oxygène dans le four,
et, dans les deuxièmes conditions stables, les étapes suivantes :
(a") alimentation de combustible à une troisième vitesse d'alimentation de combustible, proportionnelle à la deuxième charge, dans le four ;
(c') alimentation d'un flux d'alimentation d'oxygène à une troisième vitesse d'alimentation d'oxygène, réglée pour maintenir substantiellement le premier rapport oxygène-combustible, dans le four, de manière à brûler le combustible à la troisième vitesse d'alimentation de combustible, la deuxième vitesse d'alimentation d'oxygène étant supérieure à la troisième vitesse d'alimentation d'oxygène,
**caractérisé en ce que** dans les conditions d'augmentation de la charge, le rapport oxygène-combustible est supérieur au premier rapport oxygène-combustible et la deuxième vitesse d'alimentation d'oxygène est au moins environ une fois et demi supérieure de N% à la première vitesse d'alimentation d'oxygène, de manière à brûler le combustible à la deuxième vitesse d'alimentation de combustible et à diminuer le stock de charbon de lit en brûlant du charbon du stock de charbon de lit.

2. Procédé selon la revendication 1, **caractérisé en ce que** le procédé comprend une étape d'alimentation d'un flux recyclé de gaz de combustion dans le four.

3. Procédé selon la revendication 2, **caractérisé en ce que** le rapport du flux d'alimentation d'oxygène au flux recyclé est supérieur dans les conditions d'augmentation de la charge que dans les premières conditions de charge stable.

4. Procédé selon la revendication 3, **caractérisé en ce qu'**un mélange entre le flux d'alimentation d'oxygène et le flux d'alimentation recyclé est alimenté dans le four en tant que gaz primaire et gaz secondaire, et dans les conditions d'augmentation de la charge, le rapport du flux d'alimentation d'oxygène au flux recyclé du gaz primaire est supérieur au rapport du flux d'alimentation d'oxygène au flux recyclé du gaz secondaire.

5. Procédé selon la revendication 1, **caractérisé en ce que** l'installation de chaudière comprend une alimentation en oxygène destinée à produire un flux d'oxygène substantiellement pur, et dans les premières conditions de charge stable, le flux produit d'oxygène substantiellement pur est supérieur au flux d'alimentation d'oxygène substantiellement pur, et une partie du flux produit d'oxygène substantiellement pur est stocké dans un réservoir d'oxygène.

6. Procédé selon la revendication 5, **caractérisé en ce qu'**au moins une partie du flux d'alimentation d'oxygène substantiellement pur, dans les conditions d'augmentation de la charge, est obtenue à partir du réservoir d'oxygène.

7. Procédé selon la revendication 6, **caractérisé en ce que** le flux produit d'oxygène substantiellement pur est inférieur, dans les conditions d'augmentation de la charge, au flux produit d'oxygène substantiellement pur dans les premières conditions de charge stable.

8. Procédé selon la revendication 2, **caractérisé en ce que** l'installation de chaudière comprend une alimentation en oxygène destinée à produire un flux d'oxygène substantiellement pur, et dans les deuxièmes conditions de charge stable, le flux produit d'oxygène substantiellement pur est inférieur au flux d'alimentation d'oxygène substantiellement pur, et au moins une partie du flux d'alimentation d'oxygène substantiellement pur est obtenue à partir d'un réservoir d'oxygène.

9. Procédé selon la revendication 8, **caractérisé en ce que** le flux produit d'oxygène substantiellement pur, dans les deuxièmes conditions de charge stable, est supérieur au flux produit d'oxygène substantiellement pur dans les premières conditions de charge stable.

10. Procédé selon la revendication 9, **caractérisé en ce que** le flux produit d'oxygène substantiellement pur, dans les deuxièmes conditions de charge stable, est inférieur au flux produit d'oxygène substantiellement pur dans les premières conditions de charge stable.
